# EUROPEAN PATENT APPLICATION

(11) **EP 4 746 228 A1**
(43) Date of publication of application: **20.05.2026**
(21) Application number: 25215269.9
(22) Date of filing: 12.11.2025
(51) Int. Cl.: H02J 3/28, H02J 3/32, H02J 3/46, H02J 13/00, G01R 21/133

(54) **SYSTEM AND METHOD FOR MANAGING CONSUMERS SHARED USE OF A SECONDARY ENERGY SOURCE**

(30) Priority: 14.11.2024 DE 102024133403
(71) Applicant: Horstmeier, Patrick-Noël, 88709 Meersburg (DE)
(72) Inventor: HORSTMEIER, Patrick-Noël, 88709 Meersburg (DE); BOLSÉE, Shunko, 33000 Bordeaux (FR)
(74) Representative: Grünecker Patent- und Rechtsanwälte PartG mbB

(57) **Abstract**

A system for managing consumer's shared use of a secondary energy source among a plurality of first consumers, wherein each first consumer is connected through a meter (220, 221, 222) to the power grid, the system comprising: a secondary energy source (100) generating at least temporarily secondary energy power, a converter (120) coupled to the output of the secondary energy source and for adjusting the power passing through the converter in response to a power adjustment signal, for each first consumer, a secondary power adjustment device, SPAD (300, 310, 320, 330), each SPAD comprising: first input means for connecting the SPAD to the meter of the respective consumer, second input means for connecting the SPAD to the adjusted secondary energy power output of the converter, output means for connecting the SPAD to the main circuit breaker of the respective consumer's electrical system, coupling means for combining provided grid power and provided adjusted secondary energy power to the output of the SPAD, a switching device (309, 329) for connecting or disconnecting the SPAD from the adjusted secondary energy power in response to a group selection signal, grid power sensor means (305, 325) for detecting grid power consumption by the electrical system of the respective consumer, second energy power sensor means (306, 326) for detecting secondary energy power consumption by the electrical system of the respective consumer, a controller device (308, 328) for receiving an indication of the detected grid power consumption and secondary energy power consumption and for outputting said group selection signal thereby controlling if the respective SPAD is connected or disconnected to the adjusted secondary energy power, a communication device (304, 314, 324, 334) for communicating an indication of the combined grid and secondary energy power consumption of the respective consumer to at least one other SPAD, wherein at least one SPAD out of the plurality of SPADs being adapted to receive through its communication device that indication of the combined grid and secondary energy power consumption from the other SPADs and being adapted to model the previsional power distribution and the expected total secondary energy power consumption for different groups of SPADs connected to the adjusted secondary energy power and for selecting that group of SPADs that achieves together the highest expected total secondary energy power consumption under at least the condition that substantially no power injection back into the power grid through the SPADs of the respective group occurs, wherein in response to the group selection signal, SPADs belonging to the selected group connect through their switching devices (309, 329) to the adjusted secondary energy power and SPADs not belonging to the selected group disconnect through their switching devices from the adjusted secondary energy power, and wherein the at least one SPAD that selects the group is further adapted to communicate through said communication device said power adjustment signal to the converter, thereby triggering the converter to adjust the power passing through the converter to match the modeled expected total secondary energy power consumption of the selected group of SPADs.

## Description

### FIELD OF INVENTION

The present invention is related to the distribution of a secondary energy source produced on site or close to the place of consumption in addition to the public grid or any primary energy source. The secondary energy source may be any kind of energy source and in particular green energy source, such as solar or wind energy. In particular, the present invention is related to enabling green energy to be injected into the units of a multi-unit building or in general to multiple users, while allowing for clear separate billing of green energy and grid energy for every user, even when users have different grid energy suppliers. The underlying challenge is to provide clear energy metering from two energy sources while enabling practical compatibility to any pre-existing metering installation of multi-unit buildings, even outdated ones. The demand for green energy and in particular solar energy is high, yet shared solar installations remain rare because of technical, and - thereby implied - legal limitations.

### BACKGROUND ART

To allow for the shared use of a photovoltaic installation, the simplest and so far probably the most common use is to connect the photovoltaic system to the loads of the common areas, such as lifts, lights, and heating or cooling systems. This however does not allow multiple parties to directly use the generated electric energy for covering their consumption.

Connecting one single photovoltaic system to several parties in a building raises a metering challenge that is solved in the prior art by metering systems implying a parent meter for the entire building, a meter for the solar production, and orphan meters for the different parties.

An example of such is the German "Mieterstrom" model as an attempt to implement secondary solar energy sources in multi-unit collective buildings. However, this model has presented a number of rigidities that all too often make it impractical, such as the need for significant contractual and hardware modifications for those wishing to implement such a model. These points, among others, have been recognized as obstacles to the development of these models by the German government.

A second example, currently being introduced, is the "Gemeinschaftliche Gebäudeversorgung" model, which has the shortcoming that it can only estimate the solar vs. grid consumptions of each party instead of exactly measuring it.

Patent JP-2003-134672-A describes a system in which the energy generated by the secondary source is constantly shared in fixed parts, as decided by the system's users. This however implies a non-optimal local use of the energy, since the system cannot actively redistribute allocated energy based on the user's instantaneous consumptions.

Patent EP 2 820 737 B1 describes a system in which the attributed parts can be adapted to each user's instantaneous consumption. However, the described system requires one or more of the following points that complicate the needed hardware and the installation process:
- the installation of a new two-way meter,
- the installation of a new power line between the system and the grid,
- the use of complex energy combining means, such as multiple inverters for example, that allow to control the part of energy being allocated to each user when there is a dispute for energy,
thereby not reaching optimal simplicity in the required hardware and installation process. From Figure 2 of this patent it may be derived that locally produced energy 100 may flow back to grid network 110 through two-way meter 210. This necessitates the presence of such two-way meters, which is not the case in most present installations. Typically, installed meters are one-way meters. The problem with one-way meters is that while they in principle allow energy to flow back into the grid, such backflow will make a one-way meter to count backwards, meaning that the energy provider would be required to pay the same price back for local energy that it charges to users for grid energy. Typically, energy providers are only willing to pay just a fraction of the grid price for locally produced energy. Hence the approach by EP 2 820 737 B1 may work only in the presence of specifically installed two-way meters 210 requiring respective installation permissions from grid providers and installation efforts. EP 2 820 737 B1 suggests device 300 for controlling the consumption of grid energy 110 and local energy 100 by a single user UP. It is suggested to switch off grid supply to a certain user UP in case of sufficient local energy.

WO2018/184076 A1 describes a behind-the-meter system for controlled distribution of solar power to units in a multi-unit building connected to a power grid. The system comprises a grid-tied converter 14 connectable between a solar power generator 16 and an electric power grid 12. Sensors measure instantaneous power demand and solar power consumption per unit as well as solar power generation. Switches 20 are configured to selectively connect and disconnect the units from the solar power generator 16. Controller 22 controls the switches and thereby controls power distribution of solar power between the several units. Controller 22 applies a power distribution algorithm that aims to maximize efficiency of solar power consumption within the multi-unit building as well as to prevent cross flow of energy between the units. The design aims to keep inverter 14 online while preventing cross-flow of power through the described protection measures and maximize efficiency of solar energy consumption by minimizing export of solar power to the electric power grid. The approach suggested by WO2018/184076 A1 aims to minimize injection of solar energy power, but does not prevent such injection.

The problem that needs to be solved is to provide a device and respective system that is easy to manufacture, simple to install, and backwards compatible with preexisting metering systems even of old buildings for controlled distribution of secondary energy power in a multi-unit situation or building connected to an electric power grid.

### SUMMARY OF THE INVENTION

The present invention is based on the insight that a solution to the defined problem requires the prevention of back injection of secondary energy into the power grid.

The proposed system comprises a plurality of secondary power adjustment devices, SPADs, which manage the flow of energy from the secondary energy source to consumers in such a way as to prevent the injection of energy into the power grid at least for consumers that are not allowed to inject energy back into the power grid and optionally in such a way as to prevent the flow of energy from consumer to consumer through the said devices being all connected to the secondary energy source.

To achieve this, the system models the provisional, or awaited flows based on the power demand of each user so as to find the maximally absorbable secondary energy power for a subgroup of users without injection into the power grid happening (for a group of users not allowed to inject) and optionally without cross flow of energy between the users of the subgroup. Once the subgroup of users with the maximally absorbable secondary energy power has been determined, the system connects only the users or consumers of that particular subgroup to the secondary energy source and moreover controls an inverter to feed only the determined maximally absorbable secondary energy power to that subgroup of users or consumers.

Any available excess secondary energy power that cannot be injected to that subgroup due to the limitation executed by the inverter may optionally be stored in an energy storage device, such as a battery, for later use.

In other words, the proposed solution calculates the amount of absorbable solar power without grid injection happening (for those users or consumers that are not allowed to inject) based on a model of awaited power flows based on the power demand of each user. This calculation considers the possibilities that it has (namely using switching means such as relays, but could alternatively or additionally also work through load management or a combination of those) and chooses the scenario with the highest awaited solar consumption without injection happening. This calculation excludes options that could lead to unwanted power flows (power fed into the grid or optionally cross flow between users through the line connecting all users to the secondary energy source). The power demand of the users or consumers that are not allowed to cause grid injection will condition the determination of the maximally absorbable solar power and therefore the setting of the inverter. The subtlety here is that solar power does not simply split among the users so as to be consumed in priority over grid power, neither does it split perfectly equally. Hence, the system must model, based on a series of approximations, how the power will be split up, and ideally calibrate, based on the achieved results, for better modeling in further rounds.

The invention suggests in particular a system for managing consumer's shared use of a secondary energy source among a plurality of first consumers, wherein each first consumer is connected through a meter to the power grid, the system comprising a secondary energy source generating at least temporarily secondary energy power, a converter coupled to the output of the secondary energy source and for adjusting the power passing through the converter in response to a power adjustment signal, for each first consumer, a secondary power adjustment device, SPAD, each SPAD comprising: first input means for connecting the SPAD to the meter of the respective consumer, second input means for connecting the SPAD to the adjusted secondary energy power output of the converter, output means for connecting the SPAD to the main circuit breaker of the respective consumer's electrical system, coupling means for combining provided grid power and provided adjusted secondary energy power to the output of the SPAD, a switching device for connecting or disconnecting the SPAD from the adjusted secondary energy power in response to a group selection signal, grid power sensor means for detecting grid power consumption by the electrical system of the respective consumer, second energy power sensor means for detecting secondary energy power consumption by the electrical system of the respective consumer, a controller device for receiving an indication of the detected grid power consumption and secondary energy power consumption and for outputting said group selection signal thereby controlling if the respective SPAD is connected or disconnected to the adjusted secondary energy power, a communication device for communicating an indication of the combined grid and secondary energy power consumption of the respective consumer to at least one other SPAD, wherein at least one SPAD out of the plurality of SPADs being adapted to receive through its communication device that indication of the combined grid and secondary energy power consumption from the other SPADs and being adapted to model the provisional power distribution and the expected total secondary energy power consumption for different groups of SPADs connected to the adjusted secondary energy power and for selecting that group of SPADs that achieves together the highest expected total secondary energy power consumption under at least the condition that substantially no power injection back into the power grid through the SPADs of the respective group occurs, wherein in response to the group selection, SPADs belonging to the selected group connect through their switching devices to the adjusted secondary energy power and SPADs not belonging to the selected group disconnect through their switching devices from the adjusted secondary energy power, and wherein the at least one SPAD that selects the group is further adapted to communicate through said communication device said power adjustment signal to the converter, thereby triggering the converter to adjust the power passing through the converter to match the modeled expected total secondary energy power consumption of the selected group of SPADs.

The invention further suggests a method for managing consumer's shared use of a secondary energy source among a plurality of first consumers, wherein the electrical system of each first consumer is connected through a meter to the power grid, and wherein the electrical system of each consumer is connected via a switching device to the secondary energy power source, the method comprising: determining for each first consumer the combined secondary energy power consumption and grid power consumption of the respective electrical system of the consumer, modeling on the basis of indications received from all first consumers about their combined secondary energy power consumption and grid power consumption the previsional or awaited distribution of secondary energy among connected consumers, and calculating an expected total secondary power consumption for different groups of customers, selecting that group of first consumers that achieves together the highest expected total secondary energy power consumption under at least the condition that substantially no power injection back into the power grid by the electrical systems of the first customers occurs, connecting via said switching devices the electrical systems of the first customers belonging to the selected group to the secondary energy source and disconnecting other first customers from the secondary energy source, adjusting the total power provided by the secondary energy source to the electrical systems of the selected group of first consumers to match the modeled expected total secondary power consumption of the selected group of customers.

Furthermore the invention suggests a secondary power adjustment device, SPAD, for managing consumer's shared use of a secondary energy source among a plurality of consumers, comprising: first input means for connecting the SPAD to a meter for grid power of a consumer, second input means for connecting the SPAD to a secondary energy power source, output means for connecting the SPAD to a main circuit breaker of a consumer's electrical system, coupling means for combining provided grid power and provided secondary energy power to the output of the SPAD, switching means for connecting or disconnecting the SPAD from a secondary energy power source in response to a group selection signal, grid power sensor means for detecting grid power consumption by an electrical system of a respective consumer, second energy power sensor means for detecting secondary energy power consumption by an electrical system of a consumer, a controller for receiving an indication of detected grid power consumption and secondary energy power consumption and for controlling if the SPAD is connected or disconnected from a secondary energy power source by issuing said group selection signal, communication means (304) for communicating an indication of the combined grid and second energy power consumption to other SPADs, wherein the SPAD being adapted to receive through its communication means an indication of the combined grid and secondary energy power consumption from other SPADs, being adapted to model the expected total secondary energy power consumption for different groups of SPADs connected to a secondary energy power and for selecting that group of SPADs that together achieve the highest expected total secondary energy power consumption under at least the condition that substantially no power injection back into the power grid through the SPADs of the respective group occurs, and adapted to communicate through said communication means a power adjustment signal to a converter or inverter, allowing the converter or inverter to adjust the power passing through the converter or inverter to match the modeled expected total secondary energy power consumption of a selected group of SPADs.

Embodiments according to the present invention are described in relation to the accompanying drawings, which show:
Figure 1: a simplified view of a system in accordance with an embodiment of the invention including first consumers that are not allowed to inject energy back into the power grid and second consumers that may back inject energy into the power grid,
Figure 2: a more detailed illustration of a system in accordance with an embodiment of the invention providing a simplified illustration of the secondary power adjustment devices, SPADs.

In the following detailed description, reference is made to solar power as the secondary energy source. It should be understood that solar power is merely an example and that the term solar power should merely be understood as one example of secondary energy power, such as solar power, wind power, or other green or non-green energy power.

Moreover, the description is referring in particular to multi-unit buildings as a typical scenario for using the present invention. It should be understood that the users or customers may also be other entities, such as an electrical car, an elevator, common area amenities etc. The present invention is related to a particular manner by which secondary energy is distributed, but is not limited in any way with respect of the particular consumer that receives the energy.

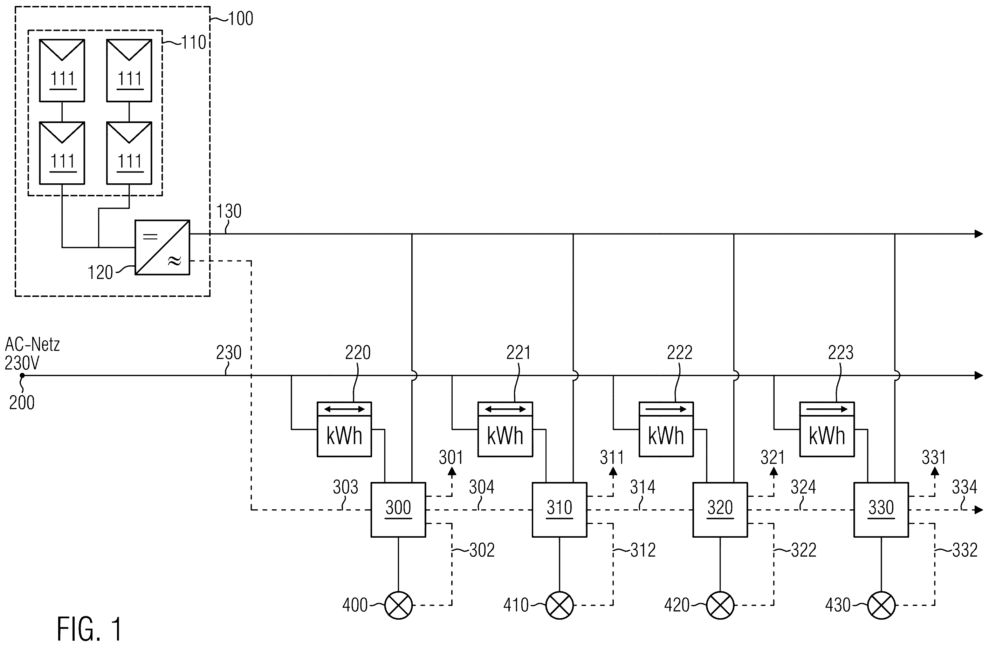

Figure 1 illustrates an embodiment of the present invention. The system comprises a number of units in a multi-user building, wherein the electrical system of each unit is illustrated by a respective load 400, 410, 420, and 430. The number of units is arbitrary and may be in a real world implementation typically be in-between 5 and 50 units. Such electrical system of a certain unit belonging to a user is referred to in the following as a consumer. Each electrical system or consumer is connected to an AC power grid 200 via line 230, wherein the connection is made in the illustrative example via a metering device 220, 221, 222, and 223. Metering devices 220 and 221 are illustrated as two-way metering devices that are able to count energy following from the AC power grid into the respective electrical system (meaning energy for which the consumer needs to pay to the energy provider of the grid) and are also to count energy flowing back from the respective electrical system into the grid, meaning energy that is injected back into the power grid. In case of such back injection of energy back into the power grid, the energy provider of the grid power may compensate the consumer, wherein such compensation is typically only a fraction of the price the consumer pays for grid energy to the provider. The energy meters of other consumers may be one-way meters 222 and 223 only, which meters can't measure the amount of back injected energy into the power grid separately. In case of such one-way meters, the energy provider will not allow any back injection of energy, as such back injection would reduce the count of the meter, which means that the energy provider would pay the same price back to a consumer that it charges for energy flowing into the electrical system. As energy providers are not willing to do so, such back injection of energy is illegal in case of one-way meters. That is the reason why in such buildings, the installation of a secondary energy source, such as a solar system 100, is difficult to realize. The presence of such secondary energy source will automatically lead to situations of back injection of energy into power grid. Solar system 100 is illustrated to comprise a photovoltaic array 110, composed of a plurality of photovoltaic or solar panels 111 that deliver energy to an inverter 120 that converts DC to AC and also is able to control the amount of energy or power that is finally allowed to flow through line 130 into electrical systems connected to line 130.

To get a system as depicted in Figure 1 to work in practice requires permissions by the one or several energy providers and possibly the installation of further two-way meters to cope with the problem of undefined back flow of energy back into the power grid. In accordance with the described embodiment, the present invention foresees for each consumer participating in a shared use of secondary energy source 100 to install a secondary power adjustment device, SPAD, 300, 310, 320, 330 between the power grid line 230, the secondary energy source line 130, and the consumers or electrical systems 400, 410, 420, 430. As will be explained in more detail herein below, the installed SPADs are able to avoid back injection of energy back into the power grid at least for those consumers that are not allowed to do such back injection, typically because of using one-way meters 222 and 223 only. Due to that function achieved by the SPADs, no illegal back injection may occur any longer thereby greatly reducing contractual and installation efforts that otherwise often prevent the introduction of green energy in multi-user buildings.

The suggested system works for first consumers that are not allowed to back inject energy into the power grid, for example because the meters are one-way meters 222, 223. Other second consumers may be allowed to back inject energy into the power grid, for example because of the presence of two-way meters 220, 221 to which their SPADs are connected.

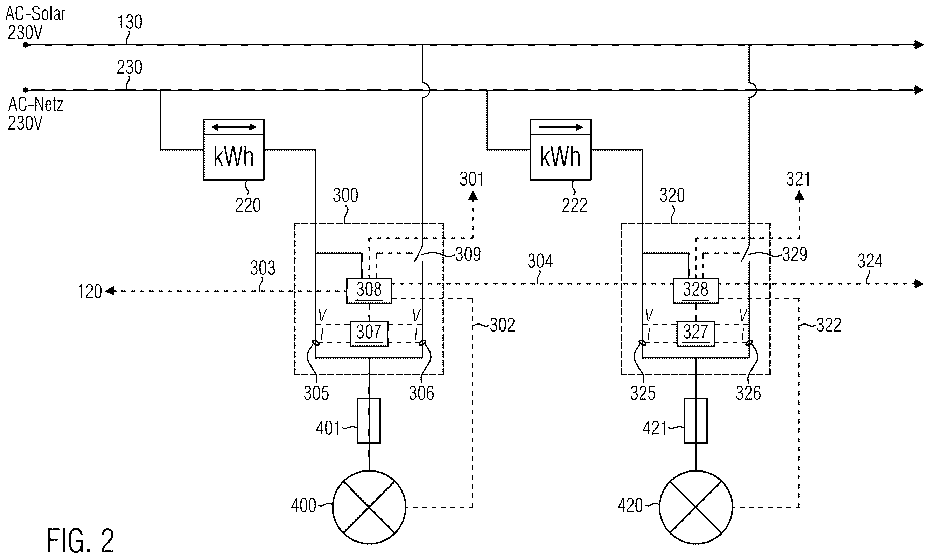

Figure 2 illustrates the SPADs in more detail. Each SPAD is connected via first input means to power grid line 230 and with a second input means to secondary energy source line 130. As explained above, the SPADs will see that only part of the secondary energy from secondary energy source 100 is allowed by inverter 120 to pass through. Grid power and secondary energy power fed through lines 230 and 130 are combined in SPAD 300, 310, 320, 330 and output through output means to the electrical system or consumer 400, 410, 420, 430 via respective main circuit breaker devices 401, 421 respectively. Each SPAD comprises a switching device 309, 329 that connects or disconnects the secondary energy power from the SPAD. The switching device 309, 329 is thereby controlled by controller device 308, 328 issuing a group selection signal that decides whether a certain SPAD is connected to secondary energy or not. Each SPAD measures through a grid power sensor means 305, 325 the grid power consumption of the electrical system connected to the respective SPAD and with secondary energy power sensor means 306, 326, the secondary energy power consumption of the respective electrical system or consumer. The sensor means may forward the measurement results to a circuit for reading the measurements provided by sensors 305, 306, 325 and 326 or directly to controller 308, 328. The controller 308, 328 will ultimately receive an indication of the combined grid power and secondary energy power consumption of the respective electrical system or consumer.

SPADs may also forward via communication means the mentioned indication of the combined grid power and secondary energy power consumption to other SPADs as illustrated by communication line 304, 314, 324, 334. Such communication may be transmitted over wires or wirelessly. In summary, at least one SPAD or a central controller or all SPADs receive in this way an indication of the combined grid power and secondary energy power consumption from all SPADs and hence is able to understand the consumption of the respective consumers or electrical systems behind those SPADs.

The controller of the SPAD having all that information will now be able to understand which consumers are in similar or acceptable ranges of consumption, which consumers have much higher consumption or even no consumption at all. The controller may then model the distribution of secondary energy power between consumers according to their current grid power demand and secondary power demand. Power distribution in a system such as the one described here is a complex phenomenon. The power distribution model can be more or less complex, to be more or less faithful to the true distribution, or more or less efficient, containing more or fewer computational steps. In real applications, this model is designed to remain simple enough to be executed by the available hardware, while being sufficiently accurate. The model can contain adjustment variables that it will update according to the results observed in each installation. These variables can be used to take into account the specificities of each installation context. The model can be configured to identify already known scenarios in order to deduce expected power distributions or to understand the user's power consumption habits. It can also contain parts of, or be entirely replaced by, an AI model, in particular machine learning.

Solar power distribution or secondary energy distribution may also be based on empirical data obtained during the development of the respective system or through measurements during the installation of the system in a building. Historical power consumption by consumers in a certain building, such as from energy invoices may be considered like-wise as well as similarities to other buildings, where the system already runs with success.

The controller attempts to calculate the maximum absorbable secondary energy power consumption for a certain group of consumers. By means of the switching devices, each SPAD may be disconnected from the secondary energy power line 130. It is important to note that this maximum absorbable secondary energy power consumption is calculated under at least the condition that SPADs currently connected to the secondary energy source through its switching means will not inject energy back into the power grid. By means of the mentioned model, different or all possible groups of consumers are tested how much secondary energy they may together absorb without thereby injecting energy back into the power grid. In case of a larger amount of consumers, the number of subgroups that need to be tested is becoming quite high (2^n-1 with n being the number of available consumers). However, the model will possibility also apply several rules that need to be fulfilled to find successful groups, such as that the members of a successful group will have consumption within certain smaller ranges, and will also possibly not test all combinations, stopping when one predefined condition of acceptability is met. These conditions may also prevent cross flow between SPADs currently all connected to line 130.

Once the algorithm has found a group of consumers that together have the highest amount of absorbable secondary energy power consumption under the condition of no back injection of energy into the power grid, this group is selected and the respective SPADs connect themselves to the secondary energy power line 130 through their respective switching means. All other SPADs not belonging to the selected group will disconnect themselves from secondary energy power.

At least one of the consumers from the selected group will communicate through communication means 303 a power adjustment signal to inverter 120 to cause inverter 120 to allow only that amount of secondary energy or power to pass through that matches the maximum absorbable secondary energy power consumption of the consumers belonging to the selected group.

In this fashion, back injection of energy into the power grid by the SPADs forming the group is avoided as the complete secondary energy fed to those SPADs of the group by inverter 120 matches the maximum absorbable secondary energy of that group, thereby avoiding any back injection into the power grid.

The condition of no back injection of energy into the power grid may not be the only condition that needs to be fulfilled by the finally selected group of SPADs or consumers: a further condition that may have to be fulfilled is lack of cross flow between the SPADs of the selected group via secondary energy power line 130. If such further condition needs to be fulfilled, possibly another group of SPADs may win the selection process.

The presence of cross flow between SPADs may be detected by measurement of secondary energy power sensor 306, 326 meaning by detecting power that flows out of a SPAD through second input means. Likewise, back-injection into the power grid may be measured or monitored or detected by means of power grid sensor 305, being able to detect energy flowing backwards into power grid line 230 through first input means of a SPAD.

Once the controller of an SPAD possess a good model of the expected power distribution, any measurements are superfluous. The model itself is then able to pre-calculate the maximum amount of absorbable secondary power consumption for different groups of SPADs (consumers) under at least the condition of no back injection of power into the power grid by that group of SPADs and optionally under the additional condition of no cross flow of energy between the SPADs forming that group.

In case of second consumers that are allowed to back inject energy into the power grid, these second consumers may also be considered during group selection. For these second consumers the algorithm will tolerate back injection into the power grid, which typically increases the maximum absorbable second energy power consumption. In other words, the algorithm will enforce the condition of no injection back into the power grid only for first consumers that are not allowed to back inject power back into the grid, but not for second consumers that are allowed to do back injection. The optional further condition of no cross flow between SPADs is a condition first and second consumers need to fulfill, provided that the second condition is also applied.

Each SPAD may have an interface for communicating with a cloud 301, 311, 321, 331 and/or may have a further interface to control loads in the electrical system of the respective consumer 302, 312, 322, 332. The latter is a possibility to influence the current load the system sees for a particular consumer and allows to maximize the absorbable secondary energy consumption achievable. For example, through such an interface, a heater, an AC system, a heat pump, a heating water tank, an electric car charger or other device with high consumption may be activated or deactivated in an attempt to achieve a more uniform secondary energy consumption for a larger group of consumers that bears then the potential to have a higher total absorbable secondary power consumption. In other words, for most users or consumers it does not matter much at which exact time a heater etc. starts to work. This flexibility may be used to achieve a more equal secondary energy power distribution among consumers, increasing the chances to achieve higher total consumption.

Theoretically, such load control on loads of a particular consumer in its electrical system by the respective SPAD may balance the consumption of users to such an extent that disconnecting of SPADs is not even necessary as all users are sufficiently balanced with respect to their power consumption. Typically, such load control is however more an additional measure to increase the total secondary energy power consumption in a system selecting a group with the highest consumption. Examples of such loads that may be controlled, meaning activated and deactivated at appropriate times are water-heating tanks, heating and cooling systems, car chargers, connected appliances (washing machines, dishwashers, private batteries etc.). It is also possible to light up an indicator on the SPAD and/or in an app in case the SPAD is installed in the apartment to tell the user that solar energy availability is high to encourage them to align their energy usage with the solar energy availability (cook when energy is available, shower when energy is available if they use instantaneous water heaters, etc.).

Different from the prior art, such described embodiments selecting groups of SPADs that remain connected to the secondary energy power, while other SPADs not belonging to the selected group are disconnected therefrom, will lead to an unfair consumption of secondary energy power at least for a certain period of time. It may happen that a certain SPAD, due to very low power demand of a longer period of time is excluded from the consumption of cheap secondary energy power for such period of time, which at first glance appears unfair. However according to an embodiment of the present invention, the actual secondary energy power consumption by a consumer is accumulated by the respective SPAD, and hence over longer periods of time, such as one month, it may be guaranteed that all SPADs are treaty fairly and that secondary energy is distributed in a fair manner. SPADs that have reached a certain consumption threshold of secondary energy consumption may no longer be eligible for group selection and will hence be barred from secondary energy consumption for the rest of the respective time period (e.g. one month) to allow others to increase their share onwards. That means the embodiment achieves fair distribution of secondary energy power not in an instant manner but rather over time.

SPADs need to communicate with other SPADs via an interface or communication device. Such communication is illustrated by reference numerals 304, 314, 324, 334. That communication may be wireless by means of LoRaWan, Wifi, Wifi Direct etc. or wired by Ethernet for example. It is also possible to communicate via AC-line by a signal added to the AC waveform.

Likewise, SPADs or at least one SPAD or central controller need to be able to communicate with inverter 120 to feed the inverter adjustment signal to it, instructing the inverter to control the amount of secondary energy power to match the maximum absorbable secondary energy power of the finally selected group of SPADs, that communication is indicated by reference numeral 303 in Figures 1 and 2. The communication is via an interface or communication device of the SPAD and may be in a wired fashion such as by using a protocol readable by the inverter, or wirelessly by directly communicating with the inverter or communicating with an additional peripheral connected to the inverter.

Moreover, an SPAD may be able to communicate with the cloud either wired as by Ethernet or wirelessly, such as by WiFi or LTE to provide consumers an overview of their solar energy use/available solar energy through an app. In case the system is part of a leasing or pay-as-you-go model, this may be used to transmit the client's consumption data for billing purposes.

To meet metering requirements for billing purposes, an SPAD may be able to interface with an external meter so that it can read the user's solar consumption from an adequate meter (geeichter Zähler). An SPAD may be mounted similarly to an energy meter, in a common area where all the meters are mounted, or in each apartment where the meters are also sometimes mounted. The SPAD may be designed to fit in standard din-rail attachment format, so that it could be installed in a typical electrical cabinet.

The SPAD is preferably a device that is easy to manufacture and that may easily be installed, further helping the spread of such devices and the related increase of buildings that now can participate in the use of green energy without higher bureaucratic or financial hurdles. The SPAD has basically three connection means: one to be connected to the power grid (via the respective one- or two-way meter); another to be connected to the secondary energy power line feeding secondary energy to all SPADs participating (and currently switched on); and a third connection means to be connected to the electrical system of a consumer preferably via the main circuit breaker of that consumer. The SPAD has further a communication module allowing to communicate via wire or wirelessly with other SPADs to communicate an indication or the actual values of the combined power grid and secondary energy consumption of the respective consumer to other SPADs as well as to receive such indications from the other SPADs. Such indications are necessary for the controller of the SPAD to model the power distribution of secondary energy over different assumed groups of SPADs (and their related electrical systems). As mentioned above the controller will try to find that group of consumers that together achieves the maximum absorbable secondary energy power under at least that the condition that SPADs that relate to consumers that are not allowed to back inject energy into the power grid, will receive as much secondary energy as possible, under the condition that no back injection occurs.

Typically those SPADs are from first consumers that have the SPAD connected to a one-way meter only. In case of second consumers that are allowed to back inject power into the grid (because they have two-way meters installed), the algorithm by which the controller calculates the power distribution will assume that back injection may happen from the SPADs of those second consumers.

Once the controller has found the group of SPADs with the maximum absorbable secondary energy power, it sends a signal (via its communication device) to the inverter or converter that instructs or triggers the inverter or converter to allow only that quantity of secondary energy power to pass through that matches that calculated maximum absorbable secondary energy. Due to that match, back injection from SPADs not allowed to do back injection is avoided. At this point, all SPADs belonging to the selected group of SPADs will connect themselves to the secondary energy power line through their respective switching devices and other SPADs not belonging to that group will disconnect themselves. Typically, the controller will send a respective signal to its associated switching device, such as a "group selection signal" indicating that the SPAD should be connected to the secondary energy as the respective SPAD forms part of the selected group.

As explained above, the necessary modeling and calculations are all performed by the controller of the SPAD. Certainly, that controller or controller device may have one or several processors and associated memory devices to be able to do the various tasks in time. In particular, one or several processors may be suited for AI modeling, others to do the communication tasks and others to do the metering task. When an SPAD is sold, it is typically loaded with a program that is able to do the necessary calculations. Typically, an SPAD will undergo a certain setting during installation to adapt the SPAD to the particular environment it is placed into. If an SPAD is later added to a system, it may read the current settings via its communication means from other SPADs already properly functioning. The initial setting and programming of an SPAD is able to fulfill the function of modelling power distribution. That setting may be based on machine learning and/or tests in a lab simulating similar conditions.

SPADs using an AI model may be realized by training a model in a test environment simulating typical installation scenarios. During training, the model may learn how to determine the previsional or awaited distribution of secondary energy power among certain consumers and how to select in an efficient manner the group of consumers with the maximum secondary power consumption. Once installed in a real environment the model may further learn during use, possibly on basis of additional measurements, for example that unintended back injections into the power grid still occur, measurements or comparisons of absorbed secondary power consumption under various conditions etc.

When installed, an SPAD may also be connected to a cloud and to the one or several inverters or converters of the system.

SPADs may be installed to take over different roles. A certain SPAD may act as a central controller that is doing all modeling and thus finds the group of consumers with the highest absorbable secondary energy. In such a centralized system that SPAD may have more processing power than other SPADs, allowing the other SPADS to have a simpler and cheaper design. In such cases the leading SPAD would communicate an indication of the selected group to other SPADs in that those other SPADs know if they have to connect or disconnect themselves from the secondary energy source. That leading SPAD may alternatively also send a connect or disconnect instruction to those other SPADs, which would then follow accordingly. In such cases it would also be the leading SPAD that informs the inverter or converter about the energy or power that it may allow to pass to the connected SPADs in that no unintended back injection into the power grid can happen.

To reduce injection even further while maximizing solar energy use, an AI model that predicts the energy consumption of the users may be implemented to "set the inverter in advance" and counterbalance the lag of the inverter (the inverter cannot react instantaneously to the demanded output and needs some seconds to adapt).

Device 120 is an inverter in case of a solar system for converting DC to AC and for controlling the power that is fed from the secondary energy source to SPADs. In case of a wind energy application or other energy source not generating DC, device 120 may be a converter converting AC generated by the wind energy or other source to AC as suitable for the SPADs.

The switching devices may be solid state relays for greater life time or electromechanical relays.

In the following some additional explanations are provided to illustrate at a high level how the algorithm may achieve calculating the maximum absorbable secondary energy consumption including power distribution of power among consumers:
The energy flow from the solar system to the connected units is not easy to accurately modelize: this is because the energy will split among the connected units, but to what exact share is a process that is complicated to modelize. In other words, the units will not use solar energy in priority over grid energy, and solar energy will be neither equally split among the connected units, nor will it split proportionally to the energy demand of each unit. If, for example, the units were to consume solar energy in priority over grid energy, building a non-injecting system would be relatively easy by measuring total demand and capping the inverter accordingly, but that is not the principle of the present invention.

In the following, some simplified examples are provided on how the system may calculate the maximally absorbable solar power. The examples below are oversimplified, and real algorithms will be more complex, may use machine learning components, and may adapt their variables over time according to the success of past modelizations to factor in specificities of each installation. In addition, the examples below do not integrate cross flow avoidance. In real situations, some of the users might be excluded, or loads managed to avoid cross flow, therefore changing the total amount of absorbed solar power.

### Equal solar power use assumption:

In such a case, the lowest consuming user that is not allowed to inject power to the grid defines the absorbable energy, as it will not be possible to feed more solar energy to him than his actual current demand.

In case all users get equal shares, the total absorbed energy is this particular energy multiplied by the number of users.

Total used solar power = Power demand of the lowest consuming user that is not allowed to inject power to the grid * users.

Under this assumption, the total used solar power can be increased by disconnecting low consuming users, or optionally by increasing the demand of low consuming users.

### Proportional component assumption:

Total used solar power = (Power demand of the lowest consuming user * this user's share in the total power demand * further component) + (Power demand second user * this user's share in the total power demand * further component) + (Power demand third user * this user's share in the total power demand * further component) + ... In such an example, the solar power flow is considered partly proportional to the power demand of each user. A model where the solar power use of each user would be simply proportional to that user's power demand would be very insufficient, which is why further components are added to the calculation (to account for tipping points, the influence of the physical layout of the system, observed differences in preceding projections, etc.)

More complex arithmetic modeling is possible to more closely represent awaited power flows. These models can also comprise variables that are calibrated to each installation. These models can also comprise parts or entirely consist of AI models.

If it is assumed that the secondary power source is connected to three units 1, 2, and 3, each of which has power demand D1 = 2000W, D2 = 800W, and D3 = 500W, then the system calculates the theoretical power distribution of the secondary power source across the units. Equal solar power use among the units is assumed, i.e. each unit receives the same power. If no units are allowed to feed power into the grid, then the system caps the inverter at 1500W, so that each unit receives 500W (still assuming equitable power distribution). In total, 1500W of solar power is consumed directly by the units.

If only unit 3 is allowed to inject solar power, for example, then the inverter would have been limited to 2400W, to respect the non-injection condition of units 1 and 2. Each unit therefore receives 800W. Unit 3 injects 800 - 500 = 300W into the grid, while units 1 and 2 inject nothing. In total, 800 + 800 + 500 = 2100W of solar power is consumed by the units.

If the goal was to maximize solar power consumption by the units, without trying to avoid injection 2000W could have been distributed to each unit, and 1000 + 800 + 500 = 2300W of solar power would have been consumed by the users, while 1200 + 1500 = 2700W would have been injected into the grid.

In accordance with an embodiment, the SPADs may follow the sequence below to connect and disconnect from the secondary energy power. This sequence can be calculated by one device (SPAD) for all devices and then sent to each device by a central controller, or each device takes a decision on its own (resulting to the same total decision since all devices follow the same logic):
Each device measures the total energy demand of its unit (grid+solar if connected to solar, just grid if only connected to grid).

This data is exchanged with the other devices (or sent to one central controller or one device that takes the role of the central controller). It should be noted that the measured solar energy consumption data is not needed in isolation and hence does not need to be calculated nor sent to the other devices, and that consequently no device knows the totally potentially available solar energy.

The controlling device, or each device on its own, then calculates the "admissible combination" (or clusters) with the highest solar energy consumption. To do so, the following steps may be performed:
Calculate the admissible combinations/clusters, such as the energy consumption of the included devices does not differ too much. This is to prevent connecting consumers with too high of a difference in energy demand, in which case energy might flow from one unit to another over the secondary devices. This process can be dynamic, i.e., the system could start with relatively close consumptions, and become more and more permissible, until it detects a risk or an occurrence of a faulty current, and then become slightly more restrictive (this is because from one circuit to another, the permissible factor might be slightly different).

If a device has already reached its energy allowance (or if it approaches it), or if a device reports a fault, that device can be temporarily excluded from the calculation of admissible combinations.

Among the admissible combinations, the controlling device (or all devices on their own since they follow the same logic) chooses the combination with the highest potential to consume solar energy (the system can also favor some users to allow them to catch up on their allowance, in which case the chosen combination might not be the one with the highest solar consumption).

The SPADs then connect or disconnect their consumers from the shared solar installation according to the chosen combination., it then caps the inverter output to the solar energy that can be absorbed by the chosen combination.

As a last optional step, the system controls that the desired energy flows are taking place. Each SPAD monitors that no energy from the grid is flowing towards another SPAD, and, if it is configured to not inject solar energy into the grid, it also controls that no injection is happening. If it detects a fault (meaning that one of these conditions is not met), it reports to the other devices (or the central controller). It could then be excluded from the next round of calculating admissible combinations. It should be noted that the device still does not communicate its solar energy consumption during this step. It may merely send a fault signal signifying to other SPADs to not include that SPAD in the next round of calculating admissible combinations. Therefore, the system avoids that grid energy paid by one user flows towards another user.

Further embodiments for the function to select the SPADs to be connected or disconnected to secondary energy power while respecting each user's injection conditions, and maximizing solar power consumption could follow an algorithm such as the one described below:
*Inputs*
   Power demand *D_{i,t}* (measured by 307 at 305 and 306, as well as by 327 at 325 and 326 on Figure 2) at time *t* for each user *i.*
   The injection rights of each user (whether injection is permitted or not), indicated by the two-way meters 220 and 221 or the one-way meter 222, 223 in Figures 1 and 2.
*Outputs*
   Inverter output power.
   Connection status (relay status) of each user.
*Operation*
   The following process is repeated periodically over time and is described below at time, *t:*
   Calculate all or those deemed sufficient possible combinations *Lₙ* of user connection states (subject to relevant conditions such as cross-flow conditions based on their power demands).

For each combination Ln, input the total power demand of each user Di,t, the number of users N, and the injection rights of every user into the power distribution model. The model will output, for every combination Ln, a maximal acceptable solar power value.

Select the *Lₘₐₓ* combination from *Lₙ*, with the highest solar power value *P_{s,tot}*.

Define the inverter's (120 in Figure 1) maximum output power through the interface 303 as the determined solar power *P_{s,tot}*.

Set the relay statuses (309 and 329 in figure 2) according to the selected combination *Lₘₐₓ.*

Optimization techniques can be employed to reduce the number of iterations, for example, by limiting the search to specific combinations during step 1.

Further embodiment for the function of inverter output power selection and load control function (without consumer connection/disconnection):
This function, although it could theoretically operate independently, would, in real applications, typically be used as a complement to function A described above.

To define the power demand of controllable loads within the system (400, 410, 420, 430 in Figure 1 and Figure 2), ensuring that each user's injection conditions are satisfied, while, whenever these conditions are met, maximizing solar power consumption.
*Inputs*
   Power demand *D_{i,t}* (measured by 307 at 305 and 306, as well as by 327 at 325 and 326 in Figure 2) at time *t* for each user *i*.
   Maximum power absorbable by each controllable load (400, 410, 420, 430) at time *t.*
   Power demand of each controllable load at time *t.*
   Injection rights of each user (symbolized by the two-way meters 220 and 221 or the one-way meter 222, 223 in Figures 1 and 2).
*Outputs*
   Inverter output power.
   Power demand of each controllable load.
*Operation*
   The following process is repeated periodically over time and is described below at time *t*:
   Input user power demands Di,t and each user's injection rights into the power distribution model (see section III. below). The model will output the maximum absorbable solar power for the given power demands

Taking into account the potential adjustments for controllable loads (based on the power absorbable by each load and their current power demands), repeat the algorithm from step 1, varying user demands within feasible limits of controllable load adjustments, with the goal of maximizing solar power consumption (i.e. maximize *P_{s,tot}*)*.*

Select the combination of controllable loads with the highest solar power value *P_{s,tot}*.

Define the inverter's (120 in Figure 1) maximum output power through the interface 303 as the determined solar power *P_{s,tot}*.

Set the demand of controllable loads 400, 410, 420 and 430 according to the selected combination.

Optimization techniques can be used to reduce the number of iterations, for example, by focusing on relevant combinations in step 2 (for example, by reducing the resolution of adjustable power settings or omitting irrelevant possibilities).

In a further embodiment, a function combining the elements of both functions A and B described above is also possible.

The various embodiments and variations described above are independent to each other but may also combined with each other (as far as no alternatives are described) as a skilled person will easily understand.

The following is a list of further preferred embodiments of the invention:
Embodiment 1.
   System for managing consumer's shared use of a secondary energy source among a plurality of first consumers, wherein each first consumer is connected through a meter (220, 221, 222) to the power grid, the system comprising:
   a secondary energy source (100) generating at least temporarily secondary energy power,
   a converter (120) coupled to the output of the secondary energy source and for adjusting the power passing through the converter in response to a power adjustment signal,
   for each first consumer, a secondary power adjustment device, SPAD (300, 310, 320, 330), each SPAD comprising:
      first input means for connecting the SPAD to the meter of the respective consumer, second input means for connecting the SPAD to the adjusted secondary energy power output of the converter, output means for connecting the SPAD to the main circuit breaker of the respective consumer's electrical system, coupling means for combining provided grid power and provided adjusted secondary energy power to the output of the SPAD,
      a switching device (309, 329) for connecting or disconnecting the SPAD from the adjusted secondary energy power in response to a group selection signal,
      grid power sensor means (305, 325) for detecting grid power consumption by the electrical system of the respective consumer,
      second energy power sensor means (306, 326) for detecting secondary energy power consumption by the electrical system of the respective consumer,
      a controller device (308, 328) for receiving an indication of the detected grid power consumption and secondary energy power consumption and for outputting said group selection signal thereby controlling if the respective SPAD is connected or disconnected to the adjusted secondary energy power,
      a communication device (304, 314, 324, 334) for communicating an indication of the combined grid and secondary energy power consumption of the respective consumer to at least one other SPAD,
      wherein at least one SPAD out of the plurality of SPADs being adapted to receive through its communication device that indication of the combined grid and secondary energy power consumption from the other SPADs and being adapted to model the previsional power distribution and the expected total secondary energy power consumption for different groups of SPADs connected to the adjusted secondary energy power and for selecting that group of SPADs that achieves together the highest expected total secondary energy power consumption under at least the condition that substantially no power injection back into the power grid through the SPADs of the respective group occurs, wherein in response to the group selection signal, SPADs belonging to the selected group connect through their switching devices (309, 329) to the adjusted secondary energy power and SPADs not belonging to the selected group disconnect through their switching devices from the adjusted secondary energy power, and wherein the at least one SPAD that selects the group is further adapted to communicate through said communication device said power adjustment signal to the converter, thereby triggering the converter to adjust the power passing through the converter to match the modeled expected total secondary energy power consumption of the selected group of SPADs.
Embodiment 2.
   The system according to embodiment 1, wherein all SPADs are adapted to receive through its communication device that indication of the combined grid and second energy power consumption from other SPADs and being adapted to model the expected total secondary energy power consumption for different groups of SPADs connected to the adjusted secondary energy power and for selecting that group of SPADs that achieves together the highest expected total secondary energy power consumption under at least the condition that substantially no power injection back into the power grid through the SPADS of the respective group occurs, and are further adapted to communicate through said communication device said power adjustment signal to the converter, allowing the converter to adjust the power passing the converter to match the modeled expected total secondary energy power consumption of the selected group of SPADs.
Embodiment 3.
   The system according to embodiment 1 or 2, wherein the system also manages shared use of a second energy source for at least one second consumer connected to the power grid, wherein each second consumer has a SPAD, which through its first input means is connected to the meter of the respective consumer, with the second input means to the adjusted secondary energy power output of the converter and with the output means to the main circuit breaker of the respective consumer's electrical system, wherein the SPAD of the at least one second consumer is eligible by other SPADs for modelling the expected total secondary power consumption for different groups of SPADs, wherein the condition of substantially no power injection back into the grid does not apply for the SPAD of the at least one second consumer.
Embodiment 4.
   The system according to one of embodiments 1-3, wherein the first consumers are connected to the power grid through a one-way meter and second consumers are connected to the power grid through a two-way meter.
Embodiment 5.
   The system according to one of embodiments 1-5, wherein the converter is an inverter converting generated DC to AC.
Embodiment 6.
   The system according to one of embodiments 1 to 5, wherein modelling by SPADs of expected total secondary power consumption for different groups of SPADs is done under the further condition of avoidance of cross flow of current between different SPADs via their second input means connected to the adjusted secondary power.
Embodiment 7.
   The system according to one of embodiments 3 to 6, wherein cross flow is detected by SPADs by measuring with the secondary energy power sensor device (306, 326) power flowing back through the second input means out of the respective SPAD.
Embodiment 8.
   The system according to one of embodiments 1 to 6, wherein power injection back into the power grid is detected by SPADs by measuring with the grid power sensor device (305, 325) power flowing back through the first input means out of the respective SPAD.
Embodiment 9.
   The system according to one of embodiments 1 to 8, wherein modelling by SPADs of expected total secondary power consumption for different groups of SPADs is done by means of a pre-trained model.
Embodiment 10.
   The system according to one of claims 1 to 9, wherein modelling by SPADs of expected total secondary power consumption for different groups of SPADs is done by means of a pre-trained model that is further trained during use.
Embodiment 11.
   The system according to one of embodiments 1 to 10, wherein secondary energy power consumption of consumers is accumulated over a predefined period of time and wherein SPADs of first or second consumers that reach within the predefined period of time a predefined threshold of secondary energy power consumption are no longer eligible by other SPADs for group selection and are permanently disconnected from the adjusted secondary energy power for the rest of said predefined period of time.
Embodiment 12.
   The system according to one of embodiments 1 to 9, wherein energy produced by the secondary energy source that cannot pass through the inverter on basis of the current adjustment is stored in an energy storage device for later use, such as a battery.
Embodiment 13.
   The system according to one of embodiments 1-12 wherein SPADs are adapted to control loads
Embodiment 14.
   A secondary power adjustment device, SPAD (300, 310, 320, 330), for managing consumer's shared use of a secondary energy source among a plurality of consumers, comprising:
   first input means for connecting the SPAD to a meter for grid power of a consumer,
   second input means for connecting the SPAD to a secondary energy power source,
   output means for connecting the SPAD to a main circuit breaker of a consumer's electrical system,
   coupling means for combining provided grid power and provided secondary energy power to the output of the SPAD,
   switching means (309, 329) for connecting or disconnecting the SPAD from a secondary energy power source in response to a group selection signal,
   grid power sensor means (305, 325) for detecting grid power consumption by an electrical system of a respective consumer,
   second energy power sensor means (306, 326) for detecting secondary energy power consumption by an electrical system of a consumer,

   a controller (308, 328) for receiving an indication of detected grid power consumption and secondary energy power consumption and for controlling if the SPAD is connected or disconnected from a secondary energy power source by issuing said group selection signal,
   communication means (304, 314, 324, 334) for communicating an indication of the combined grid and second energy power consumption to other SPADs,
   wherein the SPAD
   being adapted to receive through its communication means an indication of the combined grid an secondary energy power consumption from other SPADs,
   being adapted to model the expected total secondary energy power consumption for different groups of SPADs connected to a secondary energy power and for selecting that group of SPADs that together achieve the highest expected total secondary energy power consumption under at least the condition that substantially no power injection back into the power grid through the SPADs of the respective group occurs,
   and adapted to communicate through said communication means a power adjustment signal to a converter or inverter, allowing the converter or inverter to adjust the power passing through the converter or inverter to match the modeled expected total secondary energy power consumption of a selected group of SPADs.
Embodiment 15.
   The SPAD according embodiment 14, wherein the modelling of expected total secondary power consumption for different groups of SPADs is done by means of a pre-trained model.
Embodiment 16.
   The SPAD according to one of embodiments 14 or 15, wherein modelling of expected total secondary power consumption for different groups of SPADs is done by means of a pre-trained model that is further trained during use.
Embodiment 17.
   The SPAD according to one of embodiments 14-16, wherein the SPAD the secondary energy power consumption of the respective consumer over a predefined period of time and disconnects the SPAD from the secondary energy source for the rest of said predefined period of time, when within the predefined period of time a predefined threshold of secondary energy power consumption has been reached.
Embodiment 18.
   A method for managing consumer's shared use of a secondary energy source among a plurality of first consumers, wherein the electrical system of each first consumer is connected through a meter (220, 221, 222, 323) to the power grid, and wherein the electrical system of each consumer is connected via a switching device to the secondary energy power source, the method comprising:
   determining for each first consumer the combined secondary energy power consumption and grid power consumption of the respective electrical system of the consumer,
   modelling on basis of indications received from all first consumers about their combined secondary energy power consumption and grid power consumption the previsional distribution of secondary energy among connected consumers and calculating an expected total secondary power consumption for different groups of customers,
   selecting that group of first consumers that achieves together the highest expected total secondary energy power consumption under at least the condition that substantially no power injection back into the power grid by the electrical systems of the first customers occurs,
   connecting via said switching devices the electrical systems of the first customers belonging to the selected group to the secondary energy source and disconnecting other first customers from the secondary energy source,
   adjusting the total power provided by the secondary energy source to the electrical systems of the selected group of first consumers to match the modeled expected total secondary power consumption of the selected group of customers.
Embodiment 19.
   The method according to embodiment 18, wherein the first consumers are connected through one-way meters to the power grid.
Embodiment 20.
   The method according to embodiments 18 or 19, wherein one SPAD is doing the modelling of the provisional distribution of secondary energy among connected consumers and the calculation of an expected total secondary power consumption for different groups of customers, and shares information with other SPADS allowing the other SPADs to connect or disconnect from the secondary energy source as appropriate in view of the selected group of consumers.

## Claims

1. System for managing consumer's shared use of a secondary energy source among a plurality of first consumers, wherein each first consumer is connected through a meter (220, 221, 222) to the power grid, the system comprising:
a secondary energy source (100) generating at least temporarily secondary energy power,
a converter (120) coupled to the output of the secondary energy source and for adjusting the power passing through the converter in response to a power adjustment signal,
for each first consumer, a secondary power adjustment device, SPAD (300, 310, 320, 330), each SPAD comprising:
first input means for connecting the SPAD to the meter of the respective consumer, second input means for connecting the SPAD to the adjusted secondary energy power output of the converter, output means for connecting the SPAD to the main circuit breaker of the respective consumer's electrical system, coupling means for combining provided grid power and provided adjusted secondary energy power to the output of the SPAD,
a switching device (309, 329) for connecting or disconnecting the SPAD from the adjusted secondary energy power in response to a group selection signal,
grid power sensor means (305, 325) for detecting grid power consumption by the electrical system of the respective consumer,
second energy power sensor means (306, 326) for detecting secondary energy power consumption by the electrical system of the respective consumer,
a controller device (308, 328) for receiving an indication of the detected grid power consumption and secondary energy power consumption and for outputting said group selection signal thereby controlling if the respective SPAD is connected or disconnected to the adjusted secondary energy power,
a communication device (304, 314, 324, 334) for communicating an indication of the combined grid and secondary energy power consumption of the respective consumer to at least one other SPAD,
wherein at least one SPAD out of the plurality of SPADs being adapted to receive through its communication device that indication of the combined grid and secondary energy power consumption from the other SPADs and being adapted to model the previsional power distribution and the expected total secondary energy power consumption for different groups of SPADs connected to the adjusted secondary energy power and for selecting that group of SPADs that achieves together the highest expected total secondary energy power consumption under at least the condition that substantially no power injection back into the power grid through the SPADs of the respective group occurs, wherein in response to the group selection signal, SPADs belonging to the selected group connect through their switching devices (309, 329) to the adjusted secondary energy power and SPADs not belonging to the selected group disconnect through their switching devices from the adjusted secondary energy power, and wherein the at least one SPAD that selects the group is further adapted to communicate through said communication device said power adjustment signal to the converter, thereby triggering the converter to adjust the power passing through the converter to match the modeled expected total secondary energy power consumption of the selected group of SPADs.

2. The system according to claim 1, wherein all SPADs are adapted to receive through its communication device that indication of the combined grid and second energy power consumption from other SPADs and being adapted to model the expected total secondary energy power consumption for different groups of SPADs connected to the adjusted secondary energy power and for selecting that group of SPADs that achieves together the highest expected total secondary energy power consumption under at least the condition that substantially no power injection back into the power grid through the SPADS of the respective group occurs, and are further adapted to communicate through said communication device said power adjustment signal to the converter, allowing the converter to adjust the power passing the converter to match the modeled expected total secondary energy power consumption of the selected group of SPADs.

3. The system according to claim 1 or 2, wherein the system also manages shared use of a second energy source for at least one second consumer connected to the power grid, wherein each second consumer has a SPAD, which through its first input means is connected to the meter of the respective consumer, with the second input means to the adjusted secondary energy power output of the converter and with the output means to the main circuit breaker of the respective consumer's electrical system, wherein the SPAD of the at least one second consumer is eligible by other SPADs for modelling the expected total secondary power consumption for different groups of SPADs, wherein the condition of substantially no power injection back into the grid does not apply for the SPAD of the at least one second consumer.

4. The system according to one of claims 1-3, wherein the first consumers are connected to the power grid through a one-way meter and second consumers are connected to the power grid through a two-way meter, or
wherein the converter is an inverter converting generated DC to AC.

5. The system according to one of claims 1 to 4, wherein modelling by SPADs of expected total secondary power consumption for different groups of SPADs is done under the further condition of avoidance of cross flow of current between different SPADs via their second input means connected to the adjusted secondary power.

6. The system according to one of claims 3 to 5, wherein cross flow is detected by SPADs by measuring with the secondary energy power sensor device (306, 326) power flowing back through the second input means out of the respective SPAD, or
wherein power injection back into the power grid is detected by SPADs by measuring with the grid power sensor device (305, 325) power flowing back through the first input means out of the respective SPAD.

7. The system according to one of claims 1 to 6, wherein modelling by SPADs of expected total secondary power consumption for different groups of SPADs is done by means of a pre-trained model.

8. The system according to one of claims 1 to 7, wherein modelling by SPADs of expected total secondary power consumption for different groups of SPADs is done by means of a pre-trained model that is further trained during use.

9. The system according to one of claims 1 to 8, wherein secondary energy power consumption of consumers is accumulated over a predefined period of time and wherein SPADs of first or second consumers that reach within the predefined period of time a predefined threshold of secondary energy power consumption are no longer eligible by other SPADs for group selection and are permanently disconnected from the adjusted secondary energy power for the rest of said predefined period of time.

10. The system according to one of claims 1 to 9, wherein energy produced by the secondary energy source that cannot pass through the inverter on basis of the current adjustment is stored in an energy storage device for later use, such as a battery.

11. The system according to one of claims 1-10 wherein SPADs are adapted to control loads

12. A secondary power adjustment device, SPAD (300, 310, 320, 330), for managing consumer's shared use of a secondary energy source among a plurality of consumers, comprising:
first input means for connecting the SPAD to a meter for grid power of a consumer,
second input means for connecting the SPAD to a secondary energy power source,
output means for connecting the SPAD to a main circuit breaker of a consumer's electrical system,
coupling means for combining provided grid power and provided secondary energy power to the output of the SPAD,
switching means (309, 329) for connecting or disconnecting the SPAD from a secondary energy power source in response to a group selection signal,
grid power sensor means (305, 325) for detecting grid power consumption by an electrical system of a respective consumer,
second energy power sensor means (306, 326) for detecting secondary energy power consumption by an electrical system of a consumer,
a controller (308, 328) for receiving an indication of detected grid power consumption and secondary energy power consumption and for controlling if the SPAD is connected or disconnected from a secondary energy power source by issuing said group selection signal,
communication means (304, 314, 324, 334) for communicating an indication of the combined grid and second energy power consumption to other SPADs,
wherein the SPAD
being adapted to receive through its communication means an indication of the combined grid an secondary energy power consumption from other SPADs,
being adapted to model the expected total secondary energy power consumption for different groups of SPADs connected to a secondary energy power and for selecting that group of SPADs that together achieve the highest expected total secondary energy power consumption under at least the condition that substantially no power injection back into the power grid through the SPADs of the respective group occurs,
and adapted to communicate through said communication means a power adjustment signal to a converter or inverter, allowing the converter or inverter to adjust the power passing through the converter or inverter to match the modeled expected total secondary energy power consumption of a selected group of SPADs.

13. The SPAD according claim 12, wherein the modelling of expected total secondary power consumption for different groups of SPADs is done by means of a pre-trained model, and/or
wherein modelling of expected total secondary power consumption for different groups of SPADs is done by means of a pre-trained model that is further trained during use, and/or
wherein the SPAD the secondary energy power consumption of the respective consumer over a predefined period of time and disconnects the SPAD from the secondary energy source for the rest of said predefined period of time, when within the predefined period of time a predefined threshold of secondary energy power consumption has been reached.

14. A method for managing consumer's shared use of a secondary energy source among a plurality of first consumers, wherein the electrical system of each first consumer is connected through a meter (220, 221, 222, 323) to the power grid, and wherein the electrical system of each consumer is connected via a switching device to the secondary energy power source, the method comprising:
determining for each first consumer the combined secondary energy power consumption and grid power consumption of the respective electrical system of the consumer,
modelling on basis of indications received from all first consumers about their combined secondary energy power consumption and grid power consumption the previsional distribution of secondary energy among connected consumers and calculating an expected total secondary power consumption for different groups of customers,
selecting that group of first consumers that achieves together the highest expected total secondary energy power consumption under at least the condition that substantially no power injection back into the power grid by the electrical systems of the first customers occurs,
connecting via said switching devices the electrical systems of the first customers belonging to the selected group to the secondary energy source and disconnecting other first customers from the secondary energy source,
adjusting the total power provided by the secondary energy source to the electrical systems of the selected group of first consumers to match the modeled expected total secondary power consumption of the selected group of customers.

15. The method according to claim 14, wherein the first consumers are connected through one-way meters to the power grid, and/or
wherein one SPAD is doing the modelling of the provisional distribution of secondary energy among connected consumers and the calculation of an expected total secondary power consumption for different groups of customers, and shares information with other SPADS allowing the other SPADs to connect or disconnect from the secondary energy source as appropriate in view of the selected group of consumers.
